# EUROPÄISCHE PATENTSCHRIFT

(11) **EP 3 684 627 B1**
(45) Veröffentlichungstag und Bekanntmachung des Hinweises auf die Patenterteilung: **13.05.2026**
(21) Anmeldenummer: 18778796.5
(22) Anmeldetag: 19.09.2018
(51) Int. Cl.: B42D 25/324, B42D 25/378, B42D 25/29, B42D 25/425, C09D 5/36, C09D 11/50

(54) **PLÄTTCHENFÖRMIGES PIGMENT, DRUCKFARBE, SICHERHEITSELEMENT UND HERSTELLUNGSVERFAHREN**
DISC-SHAPED PIGMENT, PRINTING INK, SECURITY ELEMENT AND METHOD OF PRODUCTION
PIGMENT SOUS FORME DE PAILLETTES, ENCRE D'IMPRESSION, ÉLÉMENT DE SÉCURITÉ ET PROCÉDÉ DE FABRICATION

(30) Priorität: 22.09.2017 DE 102017008918
(43) Veröffentlichungstag der Anmeldung: 29.07.2020
(73) Patentinhaber: Giesecke+Devrient Currency Technology GmbH, 81677 München (DE)
(72) Erfinder: FUHSE, Christian, 83624 Otterfing (DE); RAHM, Michael, 83646 Bad Tölz (DE); HEIM, Manfred, 83646 Bad Tölz (DE); RENNER, Patrick, 83677 Reichersbeuern (DE); SCHIFFMANN, Peter, 81673 München (DE); MENGEL, Christoph, 83607 Holzkirchen (DE)
(74) Vertreter: Giesecke+Devrient IP
(86) Internationale Anmeldenummer: PCT/EP2018/000438
(87) Internationale Veröffentlichungsnummer: WO 2019/057327

(56) Entgegenhaltungen:
- EP-A1- 0 643 745
- EP-A2- 1 760 118
- EP-B1- 1 560 884
- WO-A1-2007/079851
- WO-A2-2009/010377

## Beschreibung

Die Erfindung betrifft ein plättchenförmiges Pigment, ein Verfahren zum Herstellen desselben, eine das plättchenförmige Pigment enthaltende Druckfarbe und ein auf dem erfindungsgemäßen plättchenförmigen Pigment basierendes Sicherheitselement.

Im Stand der Technik sind z.B. Siebdruckfarben bekannt, die einen Farbwechseleffekt aufweisen. Im Bereich der Banknotenherstellung wird z.B. seit vielen Jahren optisch variable Farbe ("optically variable ink" (OVI)) eingesetzt, bei der plättchenförmige Pigmente beidseitig mit einem Interferenzschichtaufbau beschichtet sind. Der Interferenzschichtaufbau, insbesondere ein dreischichtiger Reflektor/Dielektrikum / Absorber-Aufbau, vermittelt dem Betrachter in Abhängigkeit vom Betrachtungswinkel einen unterschiedlichen Farbeindruck. Solche Interferenzschichtaufbauten werden zumeist durch Vakuumverdampfen hergestellt, was technisch anspruchsvoll und kostenintensiv ist. Üblicherweise sind solche Farbwechseleffekte nicht mit beliebigen Farben durchführbar. Beim Kippen des zu betrachtenden Gegenstandes ausgehend von der senkrechten Betrachtungswinkelsituation verschiebt sich das Reflexionsspektrum in den kurzwelligen Wellenlängenbereich, sodass z.B. ausgehend vom rötlichen Wellenlängenbereich ein über den gelben Wellenlängenbereich erfolgender Farbwechsel bis hin zum grünen Wellenlängenbereich erfolgen kann, aber nicht umgekehrt. Kaum durchführbar ist weiterhin ein Kippen des Farbwechseleffekts hin zu einem resultierenden farblosen bzw. weißen Erscheinungsbild.

Weiterhin sind Interferenzpigmente erster Ordnung bekannt, die auf natürlichem Glimmer oder auf Aluminiumoxid-Flakes, Borsilikat-Flakes oder Siliziumdioxid-Flakes basieren und nasschemisch mit Titandioxid und/oder Metalloxid beschichtet werden. Druckfarben auf Basis von Interferenzpigmenten, die nur eine Titandioxidbeschichtung aufweisen, sind transparent und sind in Form eines Drucks auf weißen Untergründen nahezu nicht erkennbar, während sich im Kippwinkel die Interferenzfarbe zeigt. Die Interferenzfarbe ist von der Titandioxidbeschichtung abhängig. In Abhängigkeit von der Dicke ändert sich der Farbton von Gelb über Rot nach Blau. Derartige Pigmente werden z.B. von der Fa. Merck unter dem Markennamen Iriodin angeboten.

Interferenzpigmente mit einer Eisenoxidbeschichtung sind dagegen visuell sichtbar und zeigen je nach Beschichtungsstärke bereits in der Draufsicht auf einem weißen Untergrund einen bronzefarbenen oder roten Farbeindruck.

In der EP 1 560 884 B1 wird die Herstellung diffraktiver Pigmente beschrieben.

Die WO 2005/017048 A2 beschreibt Pigmentflakes, die mit einer Prägung in Form eines Gitters versehen sein können.

In der EP 1 760 118 A2 wird beschrieben, wie diffraktive Pigmente in einem magnetischen oder einem elektrischen Feld ausgerichtet werden können. In einer Weiterentwicklung gemäß der EP 1 806 238 B1 lassen sich mithilfe dieser Pigmente auch metamere Merkmale oder Kippbilder erzeugen.

Ein weiteres Herstellungsverfahren für Pigmente, die eine Prägung aufweisen, ist in der WO 2009/010377 A2 beschrieben.

Die EP 1 760 118 A2 beschreibt orientierbare diffraktive Pigmentpartikel mit einem ein Diffraktionsgitter bildenden Material, wobei das Material die Orientierung des Pigmentpartikels in der Anwesenheit eines angelegten elektrischen Felds ermöglicht.

Die EP 0 643 745 A1 beschreibt ein Verfahren für das Herstellen geprägter, fein verteilter glänzender metallischer Partikel, umfassend das Erzeugen einer geprägten Release-Oberfläche auf mindestens einer Seite einer Trägerschicht, das Aufbringen eines Metallfilms auf die Release-Oberfläche, sodass der Metallfilm der geprägten Oberfläche folgt, das Auflösen der Release-Oberfläche, das Entfernen des Metallfilms von der Trägerschicht und das Zerbrechen des dünnen Metallfilms in geprägte Partikel mit einem mittleren Durchmesser zwischen 25 bis 50 Mikrometer.

Ausgehend vom oben zitierten Stand der Technik liegt der Erfindung die Aufgabe zugrunde, verbesserte Pigmente und Pigmentfarben bereitzustellen, mit denen sich die Probleme zu hoher Kosten sowie die bislang üblichen Einschränkungen mit Bezug auf die Farbpalette überwinden lassen.

Die Erfindung ist insbesondere für den Einsatz der Pigmente als Sicherheitsmerkmal im Wertdokumentbereich anwendbar, jedoch nicht darauf beschränkt. So können die erfindungsgemäßen farbkippenden Beschichtungen alternativ und/ oder zusätzlich zu dekorativen Zwecken eingesetzt werden, z.B. als gedrucktes Dekorelement auf Druckerzeugnissen oder als farbkippende Lackierung im Bereich von Automobilen, Smartphones oder dergleichen.

Die Aufgabe wird durch die im Hauptanspruch definierte Merkmalskombination gelöst. Weiterbildungen der Erfindung sind Gegenstand der Unteransprüche.

### Zusammenfassung der Erfindung

1. (Erster Aspekt der Erfindung) Plättchenförmiges Pigment mit einem Schichtaufbau, der in der Reihenfolge die folgenden Schichten aufweist:
   - optional ein Trägersubstrat;
   - eine transparente Prägelackschicht mit einer eingeprägten Reliefstruktur;
   - eine der Reliefstruktur folgende, eine reflektierende Mikrostruktur bildende reflexionserhöhende Beschichtung, wobei die reflektierende Mikrostruktur in Form eines Mosaiks aus einer Vielzahl reflektierender Mosaikelemente vorliegt und die reflektierenden Mosaikelemente das einfallende Licht mit Bezug auf die Ebene des Plättchens nicht in die Richtung des Spiegelreflexes, sondern in eine davon abweichende Raumrichtung reflektieren und jeweils eine laterale Abmessung **1,** die größer als 2 µm ist, aufweisen, wobei die reflexionserhöhende Beschichtung eine Metallisierung ist, die von einer lasierenden Farbschicht bedeckt ist, und die Prägelackschicht in einem Farbton eingefärbt ist, der mit dem Farbton der lasierenden Farbschicht identisch ist.

Die Prägelackschicht auf der der Reliefstruktur gegenüberliegenden Seite kann zusätzlich eine ebene metallisierte Fläche und optional eine weitere lasierende Farbschicht aufweisen, wobei der Farbton der lasierenden Farbschicht und der Farbton der optionalen weiteren lasierenden Farbschicht vorzugsweise unterschiedliche Farbtöne, z.B. Rot und Grün, sind.

Die Pigmentabmessung bzw. Pigmentbreite ist bevorzugt 2-mal bis 4-mal, weiter bevorzugt 2,5-mal bis 3,5-mal, insbesondere bevorzugt 3-mal, größer als die laterale Abmessung 1 der reflektierenden Mosaikelemente.

Weiterhin wird bevorzugt, dass die laterale Abmessung 1 der reflektierenden Mosaikelemente jeweils die folgende Beziehung 2 µm < 1 < 25 µm, insbesondere bevorzugt die folgende Beziehung 2 µm < 1 < 20 µm erfüllt.

Gemäß einer bevorzugten Variante ist die reflektierende Mikrostruktur in Form eines Mosaiks aus einer Vielzahl reflektierender Mosaikelemente so beschaffen, dass die reflektierenden Mosaikelemente das einfallende Licht mit Bezug auf die Ebene des Plättchens nicht in die Richtung des Spiegelreflexes, sondern in genau eine davon abweichende Raumrichtung reflektieren.

Gemäß einer weiteren bevorzugten Variante ist die reflektierende Mikrostruktur in Form eines Mosaiks aus einer Vielzahl reflektierender Mosaikelemente so beschaffen, dass die reflektierenden Mosaikelemente das einfallende Licht mit Bezug auf die Ebene des Plättchens nicht in die Richtung des Spiegelreflexes, sondern in eine Mehrzahl davon abweichender, unterschiedlicher Raumrichtungen bzw. Raumbereiche reflektieren. Die Mehrzahl unterschiedlicher Raumrichtungen bzw. Raumbereiche kann insbesondere die Zahl 2, 3, 4, 5 oder 6 annehmen.

Die reflexionserhöhende Beschichtung kann insbesondere eine kontinuierliche oder eine diskontinuierliche, d.h. unterbrochene, Beschichtung sein. Eine kontinuierliche (bzw. vollflächige), reflexionserhöhende Beschichtung wird angesichts der einfacheren Herstellung, z.B. durch vollflächiges Bedampfen einer Metallisierung, bevorzugt. Eine diskontinuierliche Beschichtung kann z.B. durch schräges Bedampfen einer Metallisierung erhalten werden.

2. (Bevorzugte Ausgestaltung) Plättchenförmiges Pigment nach Anspruch 2.

3. (Bevorzugte Ausgestaltung) Plättchenförmiges Pigment nach Anspruch 3.

Insbesondere im Falle, dass das Grundelement der reflektierenden Mikrostruktur ein Keil bzw. Sägezahn ist, ist das Grundelement der reflektierenden Mikrostruktur mit dem reflektierenden Mosaikelement der reflektierende Mikrostruktur gleichzusetzen. Insbesondere im Falle, dass das Grundelement der reflektierenden Mikrostruktur ein von der Gruppe bestehend aus Kegeln, Stumpfkegeln, Pyramiden und Stumpfpyramiden gewähltes Element ist, beinhaltet das Grundelement zwei Mosaikelemente.

4. (Bevorzugte Ausgestaltung) Plättchenförmiges Pigment nach Anspruch 4.

5. (Zweiter Aspekt der Erfindung) Druckfarbe nach einem der Ansprüche 5 bis 8.

Die ebene Reflexionsschicht ist insbesondere eine metallische Reflexionsschicht.

Gemäß einer besonderen Variante kann das konventionelle plättchenförmige metallische Pigment eine ebene Reflexionsschicht aufweisen, die sowohl an der Oberseite als auch an der Unterseite jeweils eine lasierende Farbschicht aufweist. Die lasierenden Farbschichten weisen vorzugsweise den gleichen Farbton auf.

9. (Dritter Aspekt der Erfindung) Sicherheitselement nach Anspruch 9 zur Absicherung von Wertdokumenten, insbesondere Banknoten.

10. (Vierter Aspekt der Erfindung) Verfahren nach Anspruch 10 zum Herstellen eines plättchenförmigen Pigments.

11. (Bevorzugte Ausgestaltung) Verfahren nach Anspruch 11.

Ausführliche Beschreibung der bevorzugten Ausführungsformen
Gegenstand der vorliegenden Erfindung sind insbesondere:
a) Plättchenförmige Pigmente, die mit einer solchen Reliefstruktur versehen sind, dass einfallendes Licht im Vergleich zu Pigmenten mit einer ebenen, reflektierenden Oberfläche oder Grenzfläche in eine andere Richtung reflektiert wird.
b) Plättchenförmige Pigmente, bei denen die Reliefstruktur zusätzlich mit einer reflexionserhöhenden Beschichtung, nämlich einer Metallisierung, versehen ist.
c) Plättchenförmige Pigmente, bei denen die reflexionserhöhende Beschichtung zusätzlich farbig ist und/oder es wird mittels einer zumindest einseitig aufgebrachten lasierenden Farbe ein farbiger Eindruck erzeugt.
d) Eine Druckfarbe, insbesondere eine Siebdruckfarbe, die eine oder verschiedene Arten der oben genannten Pigmente enthält.
e) Eine Siebdruckfarbe, bei der die erfindungsgemäßen Pigmente in einer lasierenden, farbigen Matrix bzw. in einem lasierenden, farbigen Bindemittel vorliegen.
f) Ein Druck- oder Lackierverfahren zur Erzeugung von farbkippenden Schichten, bei dem mindestens eine Farbschicht durch Verwendung eines oder mehrerer der oben beschriebenen Pigmente mittels Drucken bzw. Lackieren erhalten wird.
g) Ein Sicherheitsmerkmal, das drucktechnisch mittels der erfindungsgemäßen Druckfarbe erhältlich ist.
h) Ein dekorierter Gegenstand, der drucktechnisch oder durch Lackieren mit der erfindungsgemäßen Druckfarbe erhältlich ist.
i) Ein Sicherheitsmerkmal, das drucktechnisch mittels der erfindungsgemäßen Druckfarbe erhältlich ist, wobei bei dem auf dem Wertdokumentsubstrat (insbesondere ein Papiersubstrat) angeordneten Sicherheitsmerkmal zusätzlich eine partielle Verprägung bzw. Teilverprägung vorliegt, sodass die Reliefstrukturen der erfindungsgemäßen Pigmente im Bereich der Verprägung egalisiert oder signifikant reduziert werden oder durch eine andersartige Reliefstruktur ersetzt wird. Die partielle Verprägung kann z.B. mittels eines Zifferndruckwerks oder einer Stichtiefdruckplatte mit definierten Gravuren erfolgen.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: die Lichtreflexion an einer ebenen Oberfläche;
- Fig. 2: die Lichtreflexion an reflektierenden Pigmentplättchen, wobei Fig. 2 (i) eine Detailansicht mit leicht verkippten Plättchen innerhalb der Farbschicht zeigt und Fig. 2 (ii) die somit erhaltene makroskopische Aufweitung eines reflektierten Lichtstrahls beschreibt;
- Fig. 3: ein Pigmentplättchen mit einer Reliefstruktur, die zu einer von der makroskopischen Oberflächennormalen des Pigmentplättchens abweichenden Lichtreflexionsrichtung führt;
- Fig. 4: die Lichtreflexion an Farbe mit herkömmlichen Pigmentplättchen im Bereich A und an erfindungsgemäßen Farben im Bereich B;
- Fig. 5: ein Pigment gemäß einem Vergleichsbeispiel;
- Fig. 6: die Lichtreflexion an der Oberseite und an der Unterseite eines Pigmentplättchens gemäß einem weiteren Vergleichsbeispiel;
- Fig. 7: die Erzeugung eines farbig reflektierenden Pigments mittels einer farbigen Metallisierung (Figur 7, oben) gemäß einem Vergleichsbeispiel,und die Erzeugung eines erfindungsgemäßen farbig reflektierenden Pigments mittels lasierender bunter Schichten (Figur 7, unten);
- Fig. 8: zwei verschiedene Pigmentsorten, die einfallendes Licht in unterschiedliche Richtungen und mit unterschiedlichen Farben reflektieren;
- Fig. 9: die Wirkung einer Druckfarbe, die die beiden Pigmentsorten der Figur 8 in Form eines Gemischs enthält;
- Fig. 10: ein Kombipigment, das je nach seiner Orientierung (d.h. die Reliefstruktur zeigt zum zu bedruckenden Gegenstand hin (Figur 10, rechts) oder die Reliefstruktur zeigt vom zu bedruckenden Gegenstand weg (Figur 10, links)) das Licht in unterschiedlichen Farben in unterschiedliche Richtungen reflektiert;
- Fig. 11: weitere Ausführungsvarianten für die Mikrostrukturelemente;
- Fig. 12: in zeichnerisch stark idealisierter Form die Herstellung erfindungsgemäßer Pigmente;
- Fig. 13: eine ergänzende Darstellung zur Erfassung des Reflexionswinkels;
- Fig. 14: eine weitere Ausführungsvariante.

In der Beschreibung werden insbesondere im Zusammenhang mit Druckfarben die Abkürzungen "LB" (steht für Lösungsmittel-basiertes Bindemittel), "WB" (steht für Wasser-basiertes Bindemittel) und "UV" (steht für UV-trocknendes oder UV-härtendes Bindemittel) verwendet.

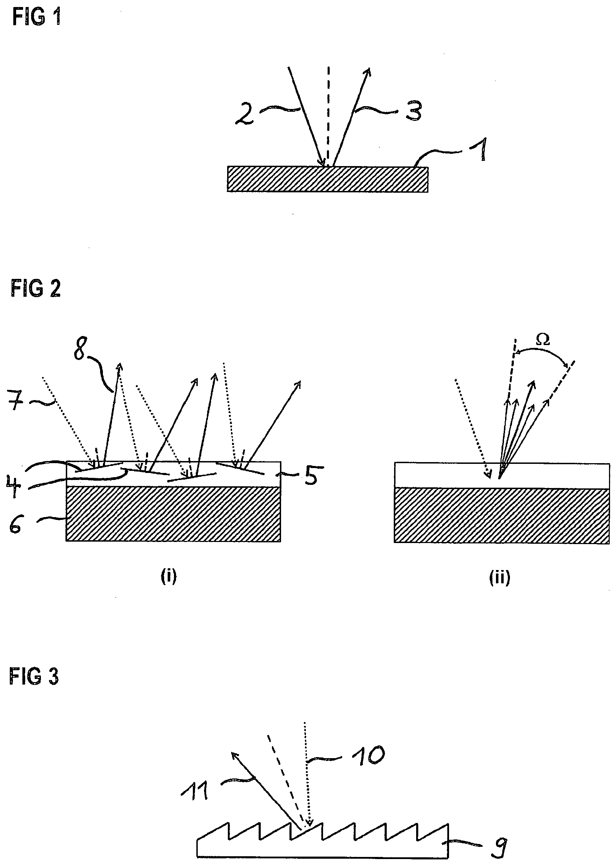

Druckfarben mit plättchenförmigen Metallpigmenten sind im Stand der Technik bekannt. Solche Pigmente reflektieren einfallendes Licht 2 im Wesentlichen im Spiegelreflex, d.h. die Lichtreflexion erfolgt so, dass Einfalls- und Ausfallswinkel mit Bezug auf die Oberflächennormale (in der Figur 1 gestrichelt gezeichnet) gleich sind. Figur 1 zeigt die Lichtreflexion 3 an einer ebenen Oberfläche 1.

In einer erfindungsgemäßen Druckfarbe ist eine Vielzahl der erfindungsgemäßen Pigmente vorhanden. Druckt man die Farbe auf ein (Papier-)Substrat, so ordnen sich die Pigmente im Wesentlichen parallel zur Substratoberfläche an. Einfallendes Licht wird dann nicht mehr genau in eine bestimmte Richtung reflektiert, sondern in einem bestimmten Winkelbereich Ω. Die Breite des Winkelbereichs Ω ist davon abhängig, wie weit die tatsächliche Ausrichtung der Pigmente von einer zur Substratoberfläche perfekt parallelen Ausrichtung abweicht. Figur 2 veranschaulicht die Lichtreflexion 8 des einfallenden Lichts 7 an reflektierenden Pigmentplättchen. Figur 2 (i) zeigt eine Detailansicht mit leicht verkippten Plättchen 4 innerhalb der auf einem Bedruckstoff 6, z.B. ein Papiersubstrat, befindlichen Farbschicht 5. Figur 2 (ii) beschreibt die somit erhaltene makroskopische Aufweitung eines reflektierten Lichtstrahls. In der Figur 2 (i) symbolisieren die gestrichelten Linien jeweils die Oberflächennormale des Pigmentplättchens, die gepunkteten Pfeile symbolisieren das einfallende Licht und die durchzogenen Pfeile symbolisieren das reflektierte Licht.

Ein erfindungsgemäßes Pigmentplättchen weist eine solche Reliefstruktur auf, dass zumindest von einer Seite einfallendes Licht mit Bezug auf die Ebene des Plättchens nicht in die Richtung des Spiegelreflexes reflektiert wird, sondern in einem davon abweichenden Winkel oder in einem davon abweichenden Winkelbereich reflektiert wird. Dies kann insbesondere dadurch erzielt werden, dass eine sägezahnförmige Reliefstruktur mit regelmäßig oder unregelmäßig angeordneten Mikrofacetten bzw. Mikrospiegeln verwendet wird. In diesem Fall wird einfallendes Licht nur mit Bezug auf die Oberfläche der einzelnen Mikrofacetten in die Richtung des Spiegelreflexes reflektiert, die von der makroskopischen Oberflächennormalen des Pigmentplättchens abweicht. Figur 3 zeigt ein erfindungsgemäßes Pigmentplättchen 9 mit einer Reliefstruktur, die (im Falle von senkrecht auf das Pigmentplättchen einfallendem Licht) zu einer von der makroskopischen Oberflächennormalen des Pigmentplättchens abweichenden Lichtreflexionsrichtung 11 des einfallenden Lichts 10 führt.

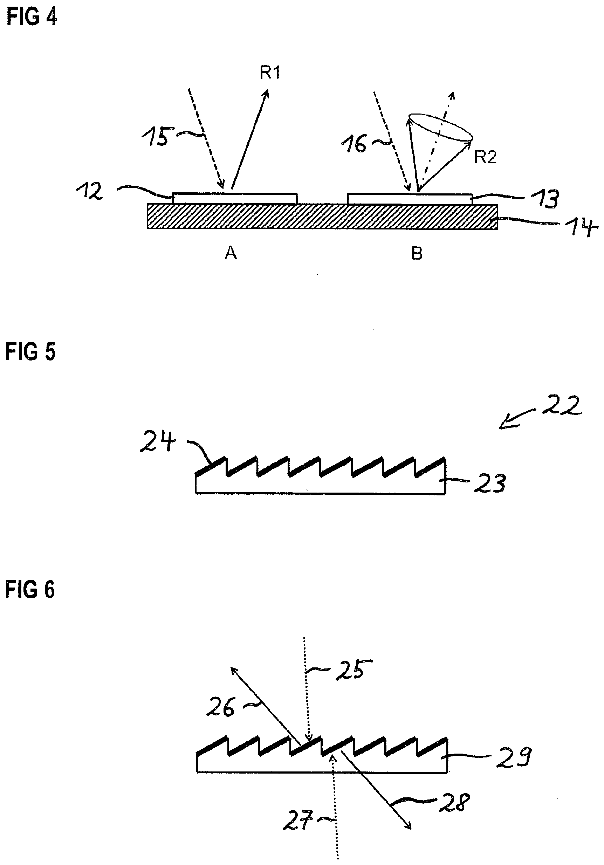

Figur 4 zeigt die Lichtreflexion im Falle einer Farbe 12 mit herkömmlichen Pigmentplättchen im Bereich A und im Falle einer erfindungsgemäßen Farbe 13 im Bereich B. Die Bezugsnummer 14 bezeichnet dabei den Bedruckstoff, z.B. ein Papiersubstrat. Druckt man eine Farbe 12 mit herkömmlichen, flachen Pigmenten im Bereich A, so reflektieren die Pigmente (eine perfekte Ausrichtung parallel zur Substratoberfläche angenommen) einfallendes Licht 15 in einer Richtung "R1". Eine Druckfarbe 13 mit den erfindungsgemäßen Pigmenten im Bereich B reflektiert das einfallende Licht 16 in eine andere Richtung, genaugenommen in andere Richtungen "R2". Im Normalfall werden die erfindungsgemäßen Pigmentplättchen zwar parallel zur Oberfläche ausgerichtet, können innerhalb dieser Ebene aber im Hinblick auf die Rotation beliebig vorliegen. Das an diesen Pigmentplättchen reflektierte Licht wird also nicht in eine bestimmte Richtung reflektiert, sondern in viele Richtungen "R2", die allesamt entlang eines um die Richtung "R1" angeordneten Kegels vorliegen. Der Öffnungswinkel des Kegels, d.h. die Abweichung von der Reflexionsrichtung herkömmlicher Pigmentplättchen bzw. Metallic-Silberfarben, ergibt sich dabei aus der Neigung der reflektierenden Facetten zur makroskopischen Oberfläche des Pigmentplättchen.

Zusammenfassend wird das einfallende Licht im Falle einer Farbe mit den erfindungsgemäßen Pigmentplättchen in andere Richtungen reflektiert wie im Falle einer Farbe mit herkömmlichen, ebene Reflexionsflächen aufweisenden Pigmentplättchen. Das gilt selbst dann, wenn sich die Pigmente nicht exakt parallel zum Substrat ausrichten, sondern um einen geringfügigen Winkel von einigen Grad abweichen. In diesem Fall wird aus der Reflexionsrichtung "R1" ein entsprechend größerer Winkelbereich und der Kegel der Richtungen "R2" vergrößert sich. Damit man das im Bereich A und im Bereich B reflektierte Licht gut voneinander trennen kann, wird die Neigung der Facetten zur Pigmentebene zweckmäßigerweise so gewählt, dass sie größer als die sich beim Druck der Pigmentfarbe ergebende Variation in der Pigmentausrichtung ist.

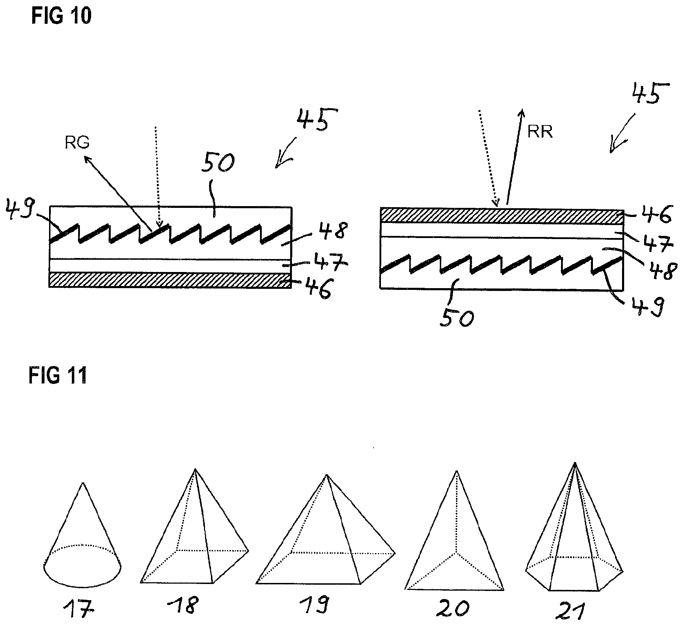

Um die Verluste von reflektiertem Licht zu reduzieren, ist eine Beschaffenheit der Reliefstruktur in Form einer symmetrischen Reliefstruktur vorteilhaft, weil in diesem Fall das einfallende Licht nicht nur in einer Winkellage, sondern in zwei Winkellagen reflektiert wird. Besonders vorteilhaft sind Reliefstrukturen, die das einfallende Licht in mehr als zwei Winkellagen reflektieren. Dies ist, wie anhand der Figur 11 gezeigt, z.B. bei Kegeln 17, Stumpfkegeln, Pyramiden und Stumpfpyramiden als Grundelement der Fall. Im Falle einer Pyramide kann z.B. eine quadratische Pyramide 18, eine Rechteckspyramide 19, eine Dreieckspyramide 20 oder eine Sechseckpyramide 21 vorliegen. Es ist von Vorteil, wenn innerhalb des Pigments der Flankenwinkel der einzelnen Reliefstruktur-Grundelemente einheitlich ist. In einer Druckfarbe können Pigmente in einheitlicher Form vorliegen, es können aber auch Druckfarben auf Basis einer Mischung mehrerer unterschiedlicher Pigmente eingesetzt werden, die sich hinsichtlich der Farbe und/oder des Flankenwinkels unterscheiden.

Die erfindungsgemäßen Pigmentplättchen weisen mit Vorteil eine geprägte Reliefstruktur und eine reflexionserhöhende bzw. reflektierende Beschichtung auf, nämlich eine Metallisierung wie z.B. Aluminium. Figur 5 zeigt ein Pigment 22 gemäß einem Beispiel, das nicht unter den Schutzumfang der beigefügten Ansprüche fällt, mit einem eine Reliefstruktur aufweisenden Prägelack 23 und einer diskontinuierlichen bzw. unterbrochenen Metallisierung 24. Die Reliefstruktur besteht aus Sägezähnen, wobei jeweils auf der längeren Seite jedes Sägezahns eine Metallisierung vorhanden ist (in der Figur 5 durch eine verdickte Linie dargestellt). Eine solche Metallisierung lässt sich z.B. durch schräges Aufdampfen einer Metallisierung erzielen. Alternativ könnte die Metallisierung aber auch vollflächig bzw. kontinuierlich auf dem gesamten Sägezahnrelief vorliegen.

Ein bevorzugtes Herstellungsverfahren für das Pigment enthält die folgenden Schritte:
- das Aufbringen eines Prägelacks auf eine Trägerfolie;
- das Prägen einer Reliefstruktur in den Prägelack;
- den Schritt des Metallisierens der Reliefstruktur;
- das Weiterverarbeiten des erhaltenen Schichtaufbaus zu einzelnen Pigmenten.

Im Schritt des Weiterverarbeitens des erhaltenen Schichtaufbaus zu einzelnen Pigmenten kann der metallisierte Prägelack von der Trägerfolie abgezogen und durch Mahlen zu Pigmenten geeigneter Größe zerkleinert werden. Optional kann zwischen Trägerfolie und Prägelack zusätzlich eine die Trennung zwischen Prägelack und Trägerfolie erleichternde Releaseschicht, z.B. eine Release-Lackschicht, vorgesehen sein. Weiterhin kann es vorteilhaft sein, auf die Metallisierung zusätzlich einen Schutzlack aufzubringen.

Bevorzugte Wege zur Behandlung unmittelbar im Zuge des PVD-Verfahrens, oder zumindest vor dem Ablösen von der Trägerfolie, und damit vor der tatsächlichen Pigmentherstellung ("particle sizing") sind insbesondere:
1. Eine Sol-Gel-Beschichtung vor dem "Strippen" über Dip-Coating, Spin-Coating, Spray-Coating, Inkjet-Printing, Tampon-Coating, Microdrop-Coating, Gravureprinting, Flexoprinting, Screenprinting, Sol-Gel-Bad mit Alkoxysilanen.
2. Eine physikalische Gasphasenabscheidung (PVD-Verfahren) mit SiO₂ und/ oder Al₂O₃ und/ oder ZnS und/ oder TiO₂, sodass das korrosionsempfindliche Metallpigment (insbesondere Aluminium) in einem Sandwich eingebettet bzw. geschützt ist (Aufbau z.B. SiO₂/Al/SiO₂) und im Anschluss optional eine Beschichtung gemäß dem obigen Absatz 1 (z.B. für ein Leafing-Pigment).
3. Eine chemische Gasphasenabscheidung (CVD-Verfahren) oder eine plasmaunterstützte chemische Gasphasenabscheidung.
4. Plasmachemische Gasphasenabscheidung (bzw. Plasmabeschichtung) mit z.B. Fluorkohlenstoff-Polymeren, Plasmaabscheidung glasartiger, dünner Schichten auf Basis von siliziumorganischen Monomeren, z.B. Hexamethyldisiloxan (HMDSO), oder Tetraethoxysilan.

Weiterhin kann es vorteilhaft sein, das Pigment zu phosphatieren, um dasselbe vor Korrosion zu schützen.

Um eine Beschädigung der Pigmente bei der Einbringung in ein Druckfarbenbindemittel zu vermeiden, werden die Pigmente vorzugsweise schonend dispergiert, z.B. mittels eines offenen Dreiwalzenstuhls, oder eingemischt, z.B. mittels eines Propellerrührers als Werkzeug.

Als Bindemittelmatrix eignen sich z.B. lösemittelbasierte, wasserbasierte, Dualcured UV-trocknende Bindemittel (WB/UV oder LB/UV) und UV-trocknende Bindemittel für den Tiefdruck, Flexodruck und Siebdruck. Das Pigment liegt in der Druckfarbe in geeigneter Weise z.B. in einem Bereich von 2 Gew.-% bis 20 Gew.-% vor. Die Orientierung der Pigmente kann man durch den Einsatz von Additiven und/oder durch eine niedrige Viskosität der Gesamtfarbe positiv beeinflussen. Bei UV-vernetzenden Farben ist es von Vorteil, die Farbe bei einer leicht erhöhten Temperatur (z.B. 30°C anstelle von 20°C) zu applizieren, weil die Temperaturerhöhung die Viskosität erniedrigt.

Beispiel für eine UV-Flexodruckfarbe und eine Siebdruckfarbe (radikalisch, Leafing-Pigmente):

### Pigmentpräparation (Leafing):

Das Pigment liegt z.B. als 50%ige Dispersion in flüssigem Photoinitiator oder Reaktivverdünner vor. Eine solche Paste wird durch Umnetzen bzw. Umbenetzung aus organischem Lösungsmittel unter vorheriger Zugabe von gelöster Octylphosphonsäure, Laurylphosphonsäure oder Mono-/Diphosphorsäurestearylester erhalten (Anmerkung: der Begriff "Umnetzen" kommt aus der Tensidchemie und beschreibt die Anlagerung eines Tensid-ähnlichen Stoffes (z.B. eine langkettige Phosphor- oder Phosphonsäure) an der Oberfläche eines Pigments; dadurch wird die Oberflächenspannung des Pigments verändert, z.B. polar zu unpolar; das Lösungsmittel dient nur als Reaktionsmedium und wird entfernt, sodass die Pigment-Präparation pastös wird).
Pigmentpräparation (Leafing): 4-7%
Monomer/Reaktivverdünner: 30-40%
Prepolymere/Oligomere: 40-60%
Entschäumer: 0-1%
Benetzungshilfsmittel: 0-1%
Wachse: 0-3%
Stabilisator (HALS, Antioxidantien): 0,5-3%
Photoinitiatoren: 4-15%
Coinitiatoren (z.B. Aminsynergist, ITX, Benzophenon): 0-4%

### Beispiele für Initiatoren:

Benzoyl-Phosphinoxide, Aminoketone, Hydroxyketone, Benzilketale

### Beispiele für Monomere/Reaktivverdünner:

| | |
|---|---|
| PEA | 2-Phenoxyethylacrylat |
| HDDA | Hexandioldiacrylat |
| TPGDA | Tripropylenglykoldiacrylat |
| TMPTA | Trimethylolpropantriacrylat |
| TMP(EO)_{X}TA | Ethoxyliertes Trimethylolpropantriacrylat |
| GPTA | Propoxyliertes Glycerintriacrylat |
| PETA | Pentaerithritoltriacrylat |
| DiTMPTTA | Ditrimethylolpropantetraacrylat |
| DiPEPA | Dipentaerithritolpentaacrylat |
| DPHA | Dipentaerithritolhexaacrylat |
| DVE-3 | Triethylenglykoldivinylether |

### Beispiele für Oligomere:

Hochstrukturierte (vorpolymerisierte) Epoxyacrylate, Urethanacrylate, Polyesteracrylate, Polyetheracrylate, inerte Harze

### UV-Tiefdruck:

Farbformulierung enthält zweckmäßigerweise höhere Anteile an sehr niedrigviskosen Reaktivverdünnern wie z.B. DVE-3 oder HDDA und weniger/niedrigviskosere Prepolymeranteile; Verarbeitung bei höheren Temperaturen bis 40°C ist vorteilhaft.

### UV-Offset:

Farbformulierung enthält hochviskose/hochstrukturierte, (für Nassoffset) weniger hydrophile Monomere sowie einen relativ hohen Prepolymeranteil.

### Bestandteile UV-kationisch (Leafing-Pigmente):

Prepolymere: Bisphenol-A diglycidylether, Epoxy Novolac, Dentrimere, Reaktivverdünner: Epoxide, Divinylether, Polyole, Oxetane, Photoinitiatoren: Sulfoniumsalze und Iodoniumsalze.

### Bestandteile Nass-/Trocken-Offset, Letterpress:

z.B. modifizierte Kolophoniumharze, Kohlenwasserstoffharze, Alkydharze, ungesättigte Pflanzenöle, tierische Öle und/oder Lösungsmittel wie Mineralöle und Fettsäureester; Co/Mn-Katalysator sowie ggf. Hilfsmittel.

### Bestandteile Lösemitteldruckfarben (Non-Leafing Pigmente):

z.B. Cellulose, insbesondere Nitrocelluloseharze; Vinylpolymerisate, insbesondere Polyvinylbutyral, ggf. Polyamide; Lösungsmittel: Alkohole, Ketone, Ester, Kohlenwasserstoffe; ggf. Hilfsmittel.

Zweckmäßigerweise wird der Pigmentanteil bei Lösemittel-basierten Druckfarben möglichst hoch gewählt, z.B. mehr als 30% Festkörpergehalt. Das Verhältnis Pigment/Bindemittel beträgt vorzugsweise etwa 1:2 oder mehr Pigmentanteil. Der Pigmentanteil ist in der Regel so hoch zu wählen, dass die Anforderungen an die Druckfarbe, z.B. Abrieb, Haftung und Überdruck, gerade noch erfüllt werden. Der gesamte Festkörperanteil in der Druckfarbe ist wiederum möglichst gering zu wählen, vorzugsweise weniger als 10% bezogen auf die Druckfarbe. Eine Verdünnung kann z.B. durch Verwendung von Lösungsmitteln erfolgen.

### Bestandteile wässrige Druckfarben (Non-Leafing Pigmente):

Acrylate, Maleinate, Polyester, Polyurethane, Wasser, Isopropanol, Ethanol, ggf. Hilfsmittel, insbesondere Entschäumer, Benetzungsadditive, Dispiergierhilfsmittel und Pigmentstabilisatoren.

Wässrig UV: Ergänzung um Acrylatdispersionen und Photoinitiator.

Im Falle des Verwendens eines transparenten Prägelacks kann Licht, das von beiden Seiten einfällt, in Richtungen reflektiert werden, die vom Spiegelreflex gemäß der makroskopischen Oberflächennormalen des Plättchens abweichen (siehe Figur 6). Figur 6 zeigt die Lichtreflexion 26 von einfallendem Licht 25 an der Oberseite und Lichtreflexion 28 von einfallendem Licht 27 an der Unterseite eines erfindungsgemäßen Pigmentplättchens 29 gemäß einem weiteren Ausführungsbeispiel. Die Reliefstruktur besteht aus Sägezähnen, wobei jeweils auf der längeren Seite jedes Sägezahns eine Metallisierung vorhanden ist (in der Figur 6 durch eine verdickte Linie dargestellt). Eine solche Metallisierung lässt sich z.B. durch schräges Aufdampfen einer Metallisierung erzielen. Alternativ könnte die Metallisierung aber auch vollflächig auf dem Sägezahnrelief vorliegen.

Eine Metallisierung und eine Prägung auf einer Pigmentseite sind somit völlig ausreichend, wenn ein Prägelack zur Anwendung kommt, welcher vorzugsweise mindestens im VIS-Bereich transparent ist, um auf der Oberseite und auf der Unterseite jeweils die gewünschte Wirkung zu erzielen. Es spielt somit keine Rolle, ob das Pigment nach dem Drucken der Pigmentfarbe auf einen zu bedruckenden Gegenstand mit seiner Oberseite oder mit seiner Unterseite zum Gegenstand weist.

Gemäß einer weiteren bevorzugten Ausführungsform reflektieren die Pigmente einfallendes weißes Licht nicht weiß, sondern bunt. Verwendet man z.B. anstelle einer Aluminium-Metallisierung eine Gold-Metallisierung oder eine Kupfer-Metallisierung, wird das reflektierte Licht entsprechend goldfarben bzw. kupferfarben. Anstelle von Gold kann eine kostengünstigere, goldfarbene Legierung gewählt werden, z.B. eine auf Aluminium und Kupfer basierende Legierung. Weiterhin kann die Farbpalette durch das Aufdampfen eines Mehrschichtsystems vergrößert werden. So kann eine dünne Si-Schicht auf einer Al-Metallisierung dieselbe goldfarben oder blau erscheinen lassen. Insbesondere kann eine solche Si-Schicht auf beiden Seiten einer Al-Schicht aufgedampft werden. D.h. der Prägelack würde mit einem Si/Al/Si-Mehrschichtsystem bedampft werden. Solche Mehrschichtsysteme sind im Stand der Technik bekannt, siehe z.B. die WO 2016/188619 A1.

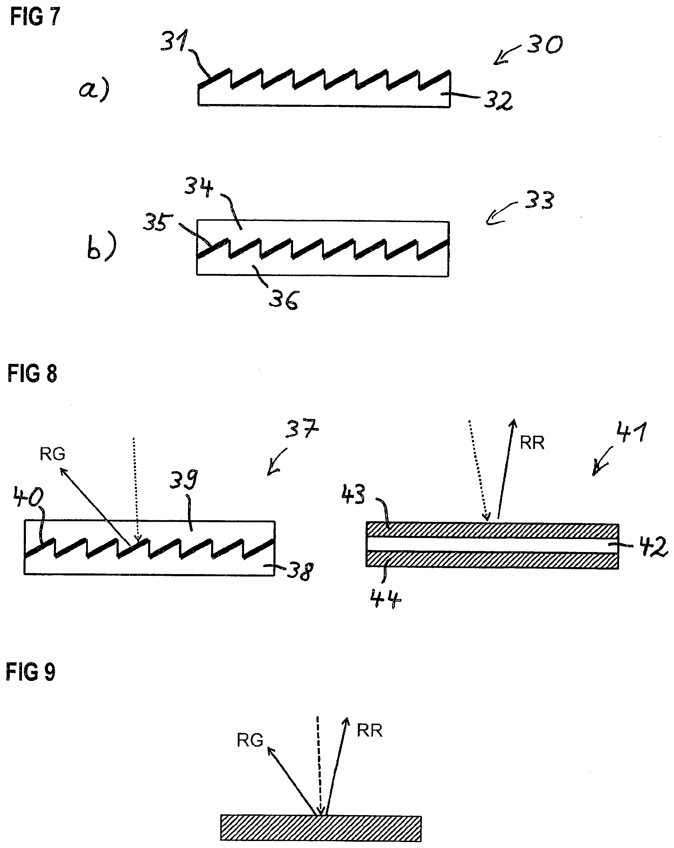

Alternativ kann anstelle einer farbigen Metallisierung eine lasierende (d.h. ohne streuende bzw. deckende Farbmittel, z.B. in Form von ungelösten Farbstoffen oder Pigmenten) Farbe verwendet werden. So könnte für das Erzielen einer grünen Farbwirkung z.B. mit einem grün eingefärbten Prägelack und gegebenenfalls mit einer zusätzlichen, lasierenden, grünen Farbschicht oberhalb der Metallisierung gearbeitet werden. Figur 7 a) veranschaulicht die Erzeugung farbig reflektierender Pigmente 30 mittels einer farbigen Metallisierung 31, im Beispiel eine Kupfer-Metallisierung. Die Bezugsnummer 32 bezeichnet einen Prägelack mit einer eingeprägten Reliefstruktur. Die Reliefstruktur besteht aus Sägezähnen, wobei jeweils auf der längeren Seite jedes Sägezahns eine Metallisierung vorhanden ist (in der Figur 7 a) durch eine verdickte Linie dargestellt). Eine solche Metallisierung lässt sich z.B. durch schräges Aufdampfen einer Metallisierung erzielen. Alternativ könnte die Metallisierung aber auch vollflächig auf dem Sägezahnrelief vorliegen. Figur 7 b) veranschaulicht die Erzeugung farbig reflektierender erfindungsgemäßer Pigmente 33 mittels lasierender bunter Schichten 34 und 36. Die Bezugsnummer 36 bezeichnet einen grün gefärbten Prägelack mit einer eingeprägten Reliefstruktur. Mit der Bezugsnummer 34 ist ein grüner Decklack bezeichnet. Die Reliefstruktur besteht aus Sägezähnen, wobei jeweils auf der längeren Seite jedes Sägezahns eine Metallisierung 35 vorhanden ist (in der Figur 7 b) durch eine verdickte Linie dargestellt). Eine solche Metallisierung lässt sich z.B. durch schräges Aufdampfen einer Metallisierung erzielen. Alternativ könnte die Metallisierung aber auch vollflächig auf dem Sägezahnrelief vorliegen.

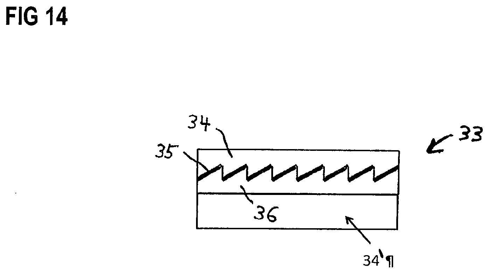

Mit Bezug auf Figur 14 wird in diesem Absatz eine weitere, alternative Ausführungsvariante erklärt. Die Schicht 36 ist ein nicht-eingefärbter, transparenter Prägelack. Die Schicht 35 ist eine Metallisierung und die Schicht 34 ist eine lasierende Farbschicht. Die Schicht 34' ist eine unter der Prägelackschicht 36 befindliche weitere lasierende Farbschicht, welche vorzugsweise den gleichen Farbton wie die Schicht 34 aufweist. Hierbei wird sichergestellt, dass sich unabhängig von der Lage der Pigmente der Aufsichtsfarbton der Pigmente makroskopisch nicht ändert bzw. es nicht zu einer Mischfarbe von unterschiedlich eingefärbten Pigmentseiten kommt. Die weitere lasierende Farbschicht 34' kann dabei vor oder nach der Verprägung appliziert werden.

Grundsätzlich kann anstelle eines eingefärbten Prägelacks ein farbloser Prägelack mit einer lasierenden farbigen Schicht unterlegt werden, die vor dem Prägelack aufgebracht wird. Alternativ können sich zwischen der Prägelackschicht und der lasierenden Farbschicht weitere Schichten befinden, die transparent sind.

Weiterhin ist es möglich, farblose Pigmente in ein gefärbtes Bindemittel einzubetten oder eine erfindungsgemäße Druckfarbe mit einer weiteren lasierenden Farbschicht zu überziehen, um eine gewünschte Farbwirkung zu erhalten. Weiterhin könnte im Falle eines transparenten zu bedruckenden (Papier-)Substrats eine entsprechende lasierende Farbschicht bereits vor dem Druck der die erfindungsgemäßen Pigmente enthaltenden Druckfarbe gedruckt werden, um eine Farbwirkung zu erhalten.

Farbwechseleffekte lassen sich dadurch erzielen, dass man erfindungsgemäße Pigmente unterschiedlicher Farbe und unterschiedlicher Facettenneigung miteinander kombiniert. Dadurch ist es beispielsweise möglich, aus einer Grundpigmentpalette (wie z.B. Gelb, Magenta und Cyan, gegebenenfalls zusätzlich Orange und/oder Grün) nahezu jeden Farbton aus Pigmentmischungen oder Farbmischungen aus monopigmentierten Basisfarben entsprechend dem Kundenwunsch flexibel herzustellen. Die Facettenneigung (bzw. Reliefstruktur) ist hierbei vorzugsweise gleich. Im einfachsten Fall weist eine Pigmentsorte gar keine Neigung auf, ist also lediglich ein farbiges Pigment mit einer ebenen Reflexionsschicht. Gemäß dem in der Figur 8 gezeigten Ausführungsbeispiel werden grüne Pigmente 37 (Figur 8, links), die eine Reliefstruktur aufweisen, als eine erste Pigmentsorte in Kombination mit roten Pigmenten 41 (Figur 8, rechts) mit einer ebenen Reflexionsschicht als eine zweite Pigmentsorte verwendet. Im Falle der ersten Pigmentsorte wird einfallendes Licht in eine erste Richtung "RG" grün reflektiert, im Falle der zweiten Pigmentsorte wird einfallendes Licht in die Richtung "RR" rot reflektiert. Das grüne Pigment 37 enthält einen grün gefärbten Prägelack 38 mit einer eingeprägten Reliefstruktur. Mit der Bezugsnummer 39 ist ein grüner transparenter Lack (bzw. Decklack) gemeint, welcher oberhalb des Prägelacks angeordnet ist. Die Reliefstruktur besteht aus Sägezähnen, wobei jeweils auf der längeren Seite jedes Sägezahns eine Metallisierung 40 vorhanden ist (in der Figur 8 durch eine verdickte Linie dargestellt). Eine solche Metallisierung lässt sich z.B. durch schräges Aufdampfen einer Metallisierung erzielen.

Werden Pigmente mit einer diskontinuierlichen Metallisierung versehen, so zeigen diese Pigmente bei einer Winkel-Lage wie der "Sägezahn" 35 (spitzer Winkel) wegen der fehlenden Metallisierung der senkrecht angeordneten Flanke eine größtmögliche Transparenz bzw. eine kleinstmögliche Reflektivität. Dies führt dazu, dass man bei dieser Winkellage eine weitere, unterhalb der auf den erfindungsgemäßen Pigmenten basierenden Druckfarbe angeordnete farbige Druckschicht besonders gut erkennen kann, oder bei einer Applikation auf einem transparenten Substrat eine größtmögliche Durchlässigkeit von Licht detektieren kann.

Bei einer anderen Variante wird eine erste metallische Schicht diskontinuierlich, eine zweite andersfarbige metallische Schicht kontinuierlich und eine dritte metallische Schicht in der Farbe wie die erste metallische Schicht wieder diskontinuierlich aufgedampft, so dass man unter der Winkellage wie der Sägezahn 35 eine andere Farbigkeit in der Reflektion erkennt.

Alternativ könnte die Metallisierung aber auch vollflächig auf dem Sägezahnrelief vorliegen. Das rote Pigment 41 (Figur 8, rechts) basiert auf einer ebenen Metallisierung 42, die auf der Oberseite eine rote lasierende Farbschicht 43 und auf der Unterseite eine rote lasierende Farbschicht 44 aufweist.

Figur 9 zeigt die erhältliche Fläche mit winkelabhängigem Farbeindruck, (i) wenn die beiden in der Figur 8 gezeigten Pigmentsorten 37 und 41 zu einer einheitlichen Druckfarbe gemischt und auf einen zu bedruckenden Gegenstand gedruckt werden, oder (ii) wenn eine erste Farbschicht mit lediglich der einen Pigmentsorte auf einen zu bedruckenden Gegenstand gedruckt wird und anschließend eine zweite Farbschicht mit lediglich der weiteren Pigmentsorte auf die erste Farbschicht gedruckt wird, oder (iii) wenn ineinander verschachtelte auf einen zu bedruckenden Gegenstand gedruckte erste und zweite Druckbereiche vorliegen, von denen der erste Druckbereich mit lediglich der einen Pigmentsorte erzeugt ist und der zweite Druckbereich mit lediglich der weiteren Pigmentsorte erzeugt ist. Demnach ergibt sich die Wirkung einer die beiden Pigmentsorten der Figur 8 enthaltenden Mischfarbe. Ein Teil des einfallenden Lichts wird grün in der Richtung "RG" reflektiert, ein weiterer Teil wird rot in der Richtung "RR" reflektiert. Ein Betrachter sieht aus der Richtung "RR" eine rote Farbe und aus der Richtung "RG" eine grüne Farbe. Die in der Kombination enthaltenen grünen Pigmente reflektieren einfallendes Licht in grün in der Richtung "RG", die roten Pigmente reflektieren das Licht in rot in Richtung "RR". Somit erscheint die Fläche einem Betrachter aus der Richtung "RG" grün und aus der Richtung "RR" rot. Man hat somit eine Druckfarbe mit richtungsabhängigem Farbeindruck erhalten.

Je nach Wahl der zu verwendenden Pigmentsorten, gegebenenfalls in Kombination mit einem gefärbten Bindemittel und/ oder einer lasierenden Farbe, lassen sich praktisch beliebige Farbeindrücke und Farbwechsel realisieren.

Anstelle des Verwendens zweier Pigmentsorten (z.B. die in der Figur 8 gezeigten Pigmente 37 und 41) in Kombination kann alternativ mit lediglich einer Pigmentsorte gearbeitet werden, sofern die Pigmente auf ihrer Oberseite und auf ihrer Unterseite unterschiedliche Reflexionsfarben und Reflexionsrichtungen aufweisen. So könnte z.B. ein in der Figur 10 gezeigtes Pigment 45 mit dem folgenden Schichtaufbau verwendet werden:
- erste lasierende Farbschicht 46, z.B. rot;
- ebene, metallisierte Fläche 47;
- Prägelack 48, der eine in den Prägelack hinein geprägte Reliefstruktur aufweist;
- eine zweite Metallisierung 49, deren Oberflächenbeschaffenheit der in den Prägelack hinein geprägten Reliefstruktur folgt (die Reliefstruktur besteht aus Sägezähnen, wobei jeweils auf der längeren Seite jedes Sägezahns eine Metallisierung 49 vorhanden ist (in der Figur durch eine verdickte Linie dargestellt; eine solche Metallisierung lässt sich z.B. durch schräges Aufdampfen einer Metallisierung erzielen; alternativ könnte die Metallisierung aber auch vollflächig auf dem Sägezahnrelief vorliegen);
- zweite lasierende Farbschicht 50, z.B. grün.

Ein Pigment mit dem im vorangehenden Absatz beschriebenen Schichtaufbau vereint somit auf seiner Oberseite und auf seiner Unterseite die Wirkungen der in der Figur 8 links und rechts gezeigten Pigmentsorten. Geht man davon aus, dass sich solche "Kombipigmente" beim Bedrucken mit ihrer roten Seite einerseits und ihrer grünen Seite andererseits mit jeweils einer gleich hohen Wahrscheinlichkeit zu dem zu bedruckenden Gegenstand hin niederschlagen, erhält man praktisch dieselbe Wirkung wie mit einer 50/50-Mischung aus den Pigmentsorten der Figur 8.

Figur 10 zeigt ein oben beschriebenes Kombipigment, das je nach seiner Orientierung (d.h. die Reliefstruktur zeigt zum zu bedruckenden Gegenstand hin (Figur 10, rechts) oder die Reliefstruktur zeigt vom zu bedruckenden Gegenstand weg (Figur 10, links)) das Licht in unterschiedlichen Farben in unterschiedliche Richtungen reflektiert.

Mit Bezug auf die in der Figur 10 gezeigte Ausführungsvariante wird an dieser Stelle angemerkt, dass gemäß einer (zeichnerisch nicht gezeigten) Variante anstelle von zwei Farbschichten lediglich eine Farbschicht und z.B. eine farbige Metallisierung im Pigment enthalten sein können. Mit Bezug auf die Figur 10 wäre z.B. eine gelbe Farbschicht 46 verzichtbar, wenn die Metallisierung 47 goldfarben ist. Analoges gilt für die Schichten 49 und 50.

Prinzipiell können anstelle des Verwendens zweier Pigmentsorten in Kombination auch drei oder mehr Pigmentsorten in Kombination verwendet werden, wobei sich die Pigmentsorten im Hinblick auf die Reliefstruktur-Facettenneigung und/oder im Hinblick auf den Farbeindruck unterscheiden. Somit sind auch weitergehende Varianten mit Vielfachfarbwechsel, z.B. Grün-zu-Rot-zu-Blau oder dergleichen, realisierbar.

Die erfindungsgemäßen Pigmente können zweckmäßigerweise eine zusätzliche magnetische Schicht aufweisen. Auf diese Weise sind Pigmente erhältlich, die durch den Einsatz von Magnetfeldern ausgerichtet werden können. Auf diese Weise kann eine Vielzahl von dynamischen Bewegungseffekten und Farbeffekten erzielt werden. Stattet man z.B. die in der Figur 8 gezeigten grünen und roten Pigmente jeweils mit einer magnetischen Schicht aus, können die so erhaltenen Pigmente nach dem Bedrucken auf einen zu bedruckenden Gegenstand und dem Ausrichten der Pigmente in einem Magnetfeld rot-grüne Bewegungseffekte zeigen. Ähnliche Bewegungseffekte sind im Stand der Technik z.B. im Zusammenhang mit kommerziell erhältlichen OVMI-Farben bekannt, siehe u.a. das Sicherheitsmerkmal Sicpa SPARK^{®}.

Gemäß einer weiteren Ausführungsvariante kann die magnetische Schicht beim erfindungsgemäßen Pigment strukturiert vorliegen. Die Strukturierung der magnetischen Schicht kann insbesondere über eine Prägung erfolgen. Die Strukturierung kann auch hier durch eine schräge (Vakuum)Bedampfung erfolgen. Die Prägung kann anschließend mit einem magnetischen Material beschichtet werden, alternativ kann die Prägung auch nach der Beschichtung stattfinden. Infrage kommen z.B. Schichten, die Fe, Ni und/oder Co enthalten. Typische Schichtdicken liegen z.B. in einem Bereich von 50nm bis 500nm, bevorzugt in einem Bereich von 50nm bis 300nm. Auf diese Weise lässt sich verhindern, dass sich die Pigmente im Hinblick auf die Rotation in der Substratebene, d.h. um ihren Normalenvektor, beliebig drehen, vielmehr lässt sich durch eine geeignete Strukturierung eine magnetische Anisotropie in der Ebene der Pigmente erzielen. Mittels einer streifenförmigen Strukturierung der magnetischen Schicht (z.B. ein Liniengitter mit einer bevorzugten Gitterperiode in einem Bereich von 100 nm bis 5 Mikrometer, weiter bevorzugt 100 nm bis 1000 nm, und einer bevorzugten Tiefe von 50 nm bis 0,5 Mikrometer, weiter bevorzugt von 100 nm bis 300 nm) kann z.B. erreicht werden, dass sich die Pigmente um ihren Normalenvektor so drehen, dass die Linien der Magnetstrukturierung parallel zum Magnetfeld orientiert sind. Solche Pigmente werden sich in einem externen Magnetfeld also bevorzugt so ausrichten, dass die Pigmentebene parallel zu den Feldlinien liegt und das Pigment dabei so um seinen Normalenvektor rotiert ist, dass die Gitterlinien ebenfalls parallel zu den Magnetfeldlinien verlaufen. Alternativ zur Erzeugung einer magnetischen Anisotropie in der Pigmentebene durch Prägestrukturen kann eine magnetische Anisotropie auch dadurch erreicht werden, dass die plättchenförmigen Pigmente nicht kreisrund bzw. im Wesentlichen ebenso breit wie lang sind, sondern eine elliptische bzw. allgemein langgestreckte Form aufweisen. Elongierte Plättchen richten sich in einem externen Magnetfeld bevorzugt so aus, dass die Ebene der Plättchen parallel zu den Feldlinien liegen und die lange Achse in die Richtung der Feldlinien weist.

Bei der Verwendung einer magnetischen Gitterstruktur zur Einführung einer magnetischen Anisotropie ist zu berücksichtigen, dass die magnetische Gitterstruktur neben dieser magnetischen Wirkung auch eine visuelle erkennbare optische Wirkung verursacht, die von den Gitterparametern, und dabei hauptsächlich von der Periode bestimmt wird. Liegt die Gitterperiode etwa im Bereich der Wellenlänge sichtbaren Lichts, so treten vornehmlich diffraktive Effekte auf, die für Prägehologramme typisch sind. Bei kleinerer Periode im Subwellenlängenbereich können Plasmon- und Resonanzeffekte beobachtet werden, die zu Farbänderungen im spiegelnden Reflex führen. Bei Verwendung von farbkippenden Beschichtungen (z.B. mit Reflektor/ Dielektrikum / Absorber-Mehrschichtaufbau) können auch diese in ihrer Farbwirkung verändert werden.

Die magnetisch anisotrope Beschichtung kann zusätzlich zu der reflektierenden Reliefstruktur realisiert werden. In diesem Fall sind zwei Prägungen zweckmäßig. Beispielsweise könnten die Pigmente in der Figur 10 zusätzlich zur reflektierenden Reliefstruktur, d.h. zusätzlich zur Mikrospiegelschicht, anstelle der weiteren ebenen Metallschicht eine gitterstrukturierte magnetische Schicht aufweisen. Dies würde dazu führen, dass das optische Erscheinungsbild der Pigmente durch die optische Wirkung des Gitters modifiziert wird. Die Orientierung der Gitterlinien relativ zur Orientierung der Mikrospiegel ist im Herstellungsprozess wählbar. Mithilfe eines externen Magnetfelds kann dann die gewünschte Ausrichtung der Mikrospiegel über die Anisotropie der Gitterlinien erfolgen. Beispielsweise werden die magnetischen Gitterstrukturen in der Ebene angeordnet, welche durch den Normalenvektor der Mikrospiegel und den Normalenvektor des Pigments aufgespannt wird. Aus dem weiter oben beschriebenen Kegel der Reflexionsrichtungen der Pigmente werden letztlich nur zwei Richtungen auf diesem Kegel ausgewählt. Auf diese Weise sind z.B. Druckmuster realisierbar, bei denen rote und grüne Bereiche wesentlich besser voneinander getrennt vorliegen.

In einer Variante überlagern sich die für den Mikrospiegeleffekt erforderlichen Mikrospiegelstrukturen mit den zur Erzeugung der magnetischen Anisotropie notwendigen Gitterstrukturen. Auch in diesem Fall wird die optische Wirkung der Pigmente durch das Vorhandensein der magnetischen Strukturen modifiziert.

Um beim Drucken der Druckfarbe mit den erfindungsgemäßen Pigmente möglichst gute Effekte zu erzielen, ist es vorteilhaft, niedrig viskose Bindemittelsysteme zu verwenden, die eine gute Orientierung der Pigmente zulassen. Weiterhin wird bevorzugt, Druckverfahren einzusetzen, die die Verarbeitung bzw. Applikation von großen, flachen Pigmenten zulassen, daher werden insbesondere das Siebdruck-, Flexodruck- und Tiefdruckverfahren bevorzugt.

Die erfindungsgemäßen Pigmente lassen sich auch zur Herstellung eines Sicherheitselements zur Absicherung von Wertdokumenten, insbesondere Banknoten, verwenden. Gemäß einer bevorzugten Ausführungsform wird ein beim Kippen des Wertdokuments erfolgender Farbwechsel von einer ersten in eine zweite Farbe erzeugt. Gemäß einer speziellen Ausführungsform kann eine der beiden Farben unbunt bzw. nicht-farbig (insbesondere Weiß) sein, was z.B. mit farblos metallisierten Pigmenten durchführbar ist.

Weiterhin ist es möglich, eine die erfindungsgemäßen Pigmente enthaltende Druckfarbe über einen dunklen Untergrund, z.B. eine schwarze Fläche, zu drucken. In diesem Fall erscheint die Fläche aus einigen Betrachtungswinkeln dunkel, insbesondere schwarz (nämlich außerhalb des Reflexionswinkels), und aus anderen Betrachtungswinkeln farbig, was einen besonders gut zu beobachtenden Kontrast liefert. Der Untergrunddruck kann insbesondere in Form eines Musters oder in Form von Zeichen, wie etwa eine Wertzahl, vorliegen.

Grundsätzlich ist es mit Bezug auf die erhaltene optische Wirkung vorteilhaft, wenn sich die erfindungsgemäßen Pigmente möglichst parallel zur Oberfläche des zu bedruckenden Gegenstandes anordnen. Eine möglichst gute Ausrichtung parallel zum Bedruckstoff bzw. Drucksubstrat kann im Falle von rauen Drucksubstraten z.B. mittels des Druckens eines geeigneten, die Oberflächenrauigkeit verringernden Primers erzielt werden.

Der erfindungsgemäße Effekt wird verstärkt, wenn im unmittelbaren Umfeld des Drucks auf Basis der erfindungsgemäßen Pigmente Referenzfelder für eine Draufsichtbetrachtung vorliegen oder eine Beleuchtung mittels einer diffusen Beleuchtungsquelle durchgeführt wird, und/oder bei Betrachtung mit einem gerichteten Licht bei dem Flankenwinkel der Reliefstruktur (Reflexion).

Weiterhin kann der erfindungsgemäße Effekt dadurch verstärkt werden, dass man ein erstes Druckfeld auf Basis einer ersten Pigmentsorte mit einer ersten Einfärbung und einem ersten Flankenwinkel in unmittelbarer Nachbarschaft zu einem zweiten Druckfeld auf Basis einer zweiten Pigmentsorte mit einer Einfärbung und einem zweiten Flankenwinkel anordnet, sodass sich im Idealfall eine versteckte Information erst bei Wechsel des Beleuchtungswinkels offenbart.

Weiterhin ist es möglich, einen Druck auf Basis der erfindungsgemäßen Pigmente nach der Applikation mittels eines Prägewerkzeugs oder einer Druckplatte, bevorzugt mittels einer Stahlstichdruckplatte, zumindest in Teilbereichen zu verprägen, sodass die Reliefstruktur der Pigmente zumindest deutlich reduziert oder mit einer anderen Reliefstruktur überlagert wird, sodass sich im Bereich der Verprägung ein anderer Farbeindruck als im Bereich außerhalb des Prägebereichs ergibt. Effekt bei Beleuchtung mit gerichtetem Licht im Flankenwinkel der Reliefstruktur.

Bei einer weiteren Variante wird ein Teilbereich des Drucks auf Basis der erfindungsgemäßen Pigmente mittels eines Nd:YAG-Lasers markiert, sodass nur die Reflektorschicht des Pigments entfernt wird, während die Einfärbung erhalten bleibt. In dem Fall zeigt der markierte Bereich keine gerichtete Reflexion bei dem Flankenwinkel der Reliefstruktur.

Bei einer weiteren Variante wird eine Druckfarbe auf Basis eines nicht eingefärbten, erfindungsgemäßen Pigments auf einem transparenten (Papier-)Substratbereich appliziert. Anschließend wird die erste Seite des Substrats mit einer anderen lasierenden Farbe wie die zweite des Substratbereichs eingefärbt. Dadurch zeigen sich bei Aufsicht bei Betrachtung mit diffusem Licht unterschiedliche Farben, während bei Betrachtung mit gerichtetem Licht unter dem Flankenwinkel der Reliefstruktur ein ähnlicher Farbeindruck zeigt.

Die erfindungsgemäßen Pigmente weisen vorzugsweise eine Breite bzw. Pigmentabmessung in einem Bereich von 10 µm bis 60µm auf. Die Dicke der erfindungsgemäßen Pigmente ist vorzugsweise weniger als 5 µm. Weiter bevorzugt weisen die erfindungsgemäßen Pigmente eine Breite (D50) in einem Bereich von 5 µm bis 30 µm, insbesondere eine Breite (D10 - D90) in einem Bereich von 3 µm bis 50 µm, auf. Insbesondere bevorzugt weisen die erfindungsgemäßen Pigmente eine Breite (D50) in einem Bereich von 10 µm bis 20 µm, insbesondere eine Breite (D10 - D90) in einem Bereich von 5 µm bis 35 µm, auf.

Es wird bevorzugt, dass die Reliefstruktur des erfindungsgemäßen Pigments aus regelmäßigen Sägezahngittern oder Mikrospiegelanordnungen besteht. Die Facetten der Reliefstruktur haben eine bevorzugte Prägetiefe von weniger als 10 µm, weiter bevorzugt weniger als 5 µm und insbesondere bevorzugt weniger als 3 µm. Die Breite der Facetten der Reliefstruktur ist vorzugsweise weniger als 20 µm und insbesondere bevorzugt kleiner oder gleich 10 µm. Die Breite der Facetten der Reliefstruktur wird in der vorliegenden Beschreibung auch als die laterale Abmessung 1 bezeichnet. Zur Vermeidung von Beugungseffekten haben die Facetten der Reliefstruktur eine bevorzugte Abmessung (bzw. die Sägezahngitter haben eine bevorzugte Periode) von mehr als 2 µm, weiter bevorzugt mehr als 4 µm und insbesondere bevorzugt mehr als 6 µm.

Es wird bevorzugt, dass der Neigungswinkel der reflektierenden Facetten der Reliefstrukturen in einem Bereich von 3° bis 60° liegt, wobei der Bereich von 10° bis 30° besonders bevorzugt ist.

Der Prägelack ist vorzugsweise ein UV-Prägelack. Es können aber auch thermoplastische Prägelacke verwendet werden.

Die die erfindungsgemäßen Pigmente enthaltenden Druckfarben sind vorzugsweise Siebdruckfarben, Flexodruckfarben oder Tiefdruckfarben. Es ist aber auch möglich, andere Lacke, z.B. Kraftfahrzeuglackierungen, herzustellen und zu verwenden.

Im Falle von Kraftfahrzeuglackierungen oder Industrielackierungen wird bevorzugt von einer Sprühbeschichtung (zumeist WB-Lacke), einer Tauchbeschichtung (zumeist WB-Lacke) und/oder einer Pulverbeschichtung (insbesondere elektrostatisches Verfahren) ausgegangen. Da eine gute planparallele Orientierung der Pigmente für einen sehr guten optischen Effekt vorteilhaft ist, wäre die Pulverbeschichtung weniger bevorzugt.

Die Druckfarben mit den erfindungsgemäßen Pigmenten basieren vorzugsweise auf organischen Lösungsmitteln, Wasser, Ölen oder Reaktivverdünnern und können über aktinische Strahlen, Wegschlagen und/ oder Verdunsten filmbildend sein. Sie können einkomponentig, zweikomponentig und/ oder DualCure sein.

Die die erfindungsgemäßen Pigmente enthaltenden Farben werden vorzugsweise mittels Siebdruck gedruckt. Im Falle, dass die Pigmente eine zusätzliche magnetische Schicht aufweisen, kann zusätzlich ein Magnetfeld angelegt werden.

Die reflektierenden Facetten der Reliefstrukturen der erfindungsgemäßen Pigmente müssen nicht allesamt einheitlich orientiert sein. Es ist auch möglich, dass die Facetten nur gleiche, oder zumindest ähnliche, Neigungswinkel, aber unterschiedliche Azimutwinkel aufweisen. Es ist unerheblich, ob sich ein Pigment auf dem zu bedruckenden Drucksubstrat in einem in der Substratebene rotierten Zustand niederschlägt oder ob die Facetten des Pigments von vornherein gedreht vorliegen.

Entsprechend können hinsichtlich der Reliefstruktur-Facetten anstelle von Sägezahngittern auch Pyramidenstrukturen in geeigneter Weise verwendet werden. Weiterhin lassen sich auch mit Kegelstrukturen gute Effekte erzielen. Sägezahngitter, Pyramidenstrukturen oder Kegelstrukturen werden hinsichtlich der Reliefstruktur-Facettenanordnungen bevorzugt, weil der Neigungswinkel bezüglich der makroskopischen Pigmentsubstratebene besonders vorteilhaft abgestimmt werden kann. Im Falle von Pyramidenstrukturen und Kegelstrukturen ist die laterale Abmessung 1, also die Breite der Facetten der Reliefstruktur, gleich dem halben Durchmesser der Grundfläche der jeweiligen Struktur.

Weiterhin ist es vorteilhaft, das Aspektverhältnis der Pigmente (d.h. die Dicke zur Länge) möglichst groß zu wählen, insbesondere mindestens 1:3, um in Abhängigkeit von der Rheologie des Bindemittels der Druckfarbe eine möglichst planparallele Ausrichtung der Pigmente zum (Papier-)Substrat zu erreichen.

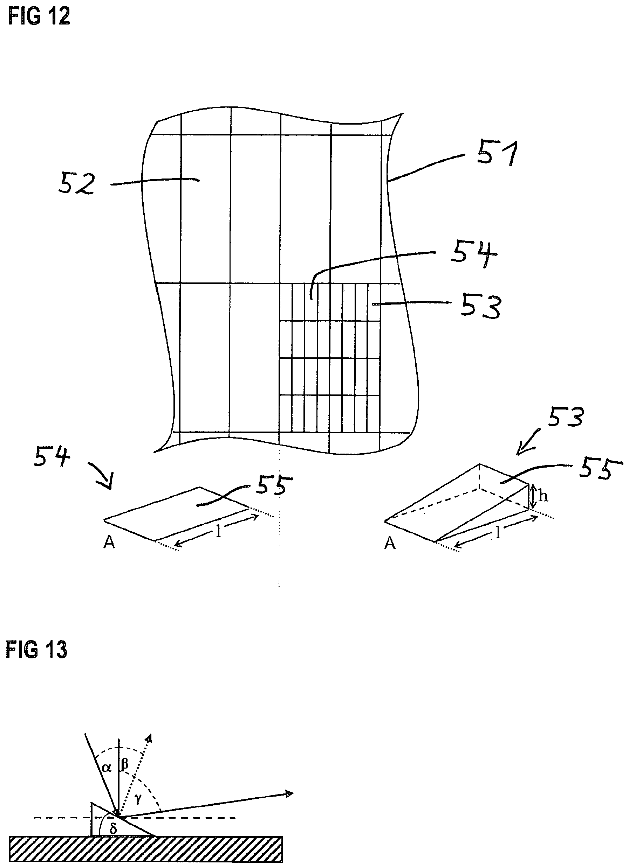

Figur 12 zeigt stark vereinfacht ausgedrückt ein Beispiel für die Herstellung der erfindungsgemäßen Pigmente. Die Bezugsnummer 51 zeigt in Draufsicht ein bahnförmiges Material 51, das eine Trägerfolie mit einem darauf aufgebrachten Prägelack umfasst. Der Prägelack weist eine darin eingeprägte und metallisierte Reliefstruktur auf. In der weiteren Verarbeitung wird das bahnförmige Material 51 zu einzelnen Pigmenten 52 zerkleinert, z.B. durch Mahlen (die einzelnen Pigmente 52 sind stark idealisiert in Form regelmäßiger Rechtecke dargestellt). Vor dem Zerkleinern des bahnförmigen Materials 51 zu einzelnen Pigmenten 52 kann der metallisierte Prägelack gegebenenfalls von der Trägerfolie abgezogen werden.

Jedes Pigment 51 enthält eine Mehrzahl reflektierender Mikrospiegel bzw. Mikrofacetten 53, 54. Die Mikrospiegel sind durch die Parameter Größe, Umrissform, Reliefform, Reflexionsvermögen und räumliche Ausrichtung charakterisiert und reflektieren einfallendes Licht entsprechend den Vorgaben dieses Parametersatzes jeweils in einen bestimmten Raumbereich. Optisch variable Sicherheitselemente mit einer solchen Mikrostruktur sind aus der WO 2007/079851 A1 und aus der WO 2011/066991 A2 bekannt.

Beispielsweise weisen die Mikrospiegel 53 und 54 der Fig. 12 jeweils eine quadratische Grundfläche A, mithin eine quadratische Umrissform, und eine laterale Ausdehnung von 15 x 15 µm² auf. Die Mikrospiegel haben darüber hinaus eine einfache Reliefform mit einer einzigen, flachen Reflexionsfläche 55, die einen bestimmten Neigungswinkel α mit der Oberfläche des Pigments einschließt.

Im Falles des Mikrospiegels 53 (der bei seitlicher Ansicht die Gestalt eines Sägezahns bzw. Keils hat) weist die Reflexionsfläche 55 einen Neigungswinkel von α = 30° zur Oberfläche des Pigments auf. Bei einer lateralen Ausdehnung von 1 = 15 µm ergibt sich bei diesem Neigungswinkel eine Strukturhöhe h von h = 1*tan(α) = 8,7 µm für den Mikrospiegel 53. Im Falle des zweiten Mikrospiegel 54 ist die Reflexionsfläche 55 nicht gegen die Oberfläche des Pigments geneigt ist (ausgedrückt durch Neigungswinkel α = 0°).

### Lediglich ergänzend wird erwähnt:

Die Erfassung des Reflexionswinkels kann mittels einer speziellen Sensorik (z.B. ein Handprüfgerät) als Echtheitsmerkmal dienen. Dazu wird beispielsweise die Druckprobe mittels eines definierten Winkels (bezogen auf die Lage der Druckprobe) beleuchtet und der Winkel mit dem Reflexionsmaximum des reflektierten Lichtes ermittelt. Hieraus lässt sich die Winkelabweichung und damit der Winkel des Sägezahns 35 ermitteln. Dieser ist charakteristisch für die Reliefstruktur des Pigments. In der Figur 13 bezeichnen die Winkel α dabei:
α = Einfallswinkel bezogen auf das Substrat;
β = erwarteter Ausfallswinkel bei Totalreflexion bezogen auf das Substrat;
γ = gemessener Ausfallswinkel bezogen auf das Substrat;
δ = Winkel der Keilstruktur bezogen auf das Substrat.

## Patentansprüche

1. Plättchenförmiges Pigment (33, 37) mit einem Schichtaufbau, der in der Reihenfolge die folgenden Schichten aufweist:
- optional ein Trägersubstrat;
- eine transparente Prägelackschicht (36, 38) mit einer eingeprägten Reliefstruktur;
- eine der Reliefstruktur folgende, eine reflektierende Mikrostruktur bildende reflexionserhöhende Beschichtung (35, 40), wobei die reflektierende Mikrostruktur in Form eines Mosaiks aus einer Vielzahl reflektierender Mosaikelemente vorliegt und die reflektierenden Mosaikelemente das einfallende Licht mit Bezug auf die Ebene des Plättchens nicht in die Richtung des Spiegelreflexes, sondern in eine davon abweichende Raumrichtung reflektieren und jeweils eine laterale Abmessung **1,** die größer als 2 µm ist, aufweisen, **dadurch gekennzeichnet, dass** die reflexionserhöhende Beschichtung eine Metallisierung ist, die von einer lasierenden Farbschicht (34, 39) bedeckt ist, und die Prägelackschicht (36, 38) in einem Farbton eingefärbt ist, der mit dem Farbton der lasierenden Farbschicht (34, 39) identisch ist.

2. Plättchenförmiges Pigment nach Anspruch 1, wobei die laterale Abmessung 1 die folgende Beziehung 4 µm < 1 < 25 µm, weiter bevorzugt die Beziehung 4 µm < 1 < 20 µm, noch weiter bevorzugt die Beziehung 4 µm < 1 ≤ 10 µm, und insbesondere bevorzugt die Beziehung 6 µm < 1 ≤ 10 µm erfüllt.

3. Plättchenförmiges Pigment nach Anspruch 1 oder 2, wobei die reflektierende Mikrostruktur aus Grundelementen besteht, die von der Gruppe bestehend aus Sägezähnen bzw. Keilen, Kegeln, Stumpfkegeln, Pyramiden und Stumpfpyramiden gewählt sind.

4. Plättchenförmiges Pigment nach einem der Ansprüche 1 bis 3, wobei das Pigment zusätzlich eine magnetische Schicht aufweist.

5. Druckfarbe mit plättchenförmigen Pigmenten nach einem der Ansprüche 1 bis 4.

6. Druckfarbe nach Anspruch 5, wobei die Druckfarbe eine Siebdruckfarbe, Flexodruckfarbe oder eine Tiefdruckfarbe ist.

7. Druckfarbe nach Anspruch 5 oder 6, wobei die Druckfarbe zwei oder mehr Pigmentsorten aufweist, die sich im Hinblick auf den Farbeindruck unterscheiden.

8. Druckfarbe nach Anspruch 7, wobei die Druckfarbe zwei Pigmentsorten aufweist, von denen die erste Pigmentsorte auf plättchenförmigen Pigmenten gemäß einem der Ansprüche 1 bis 4 basiert und die zweite Pigmentsorte auf konventionellen plättchenförmigen metallischen Pigmenten mit einer ebenen Reflexionsschicht basiert.

9. Sicherheitselement zur Absicherung von Wertdokumenten, insbesondere Banknoten, umfassend plättchenförmige Pigmente nach einem der Ansprüche 1 bis 4 oder erhältlich durch Verwenden einer Druckfarbe nach einem der Ansprüche 5 bis 8.

10. Verfahren zum Herstellen eines plättchenförmigen Pigments (33, 37) nach einem der Ansprüche 1 bis 4, umfassend
a) das Bereitstellen eines Trägersubstrats, z.B. eine Trägerfolie;
b) das Aufbringen eines Prägelacks (36, 38) auf das Trägersubstrat;
c) das Prägen einer Reliefstruktur in den Prägelack (36, 38);
d) das Versehen der Reliefstruktur mit einer der Reliefstruktur folgenden, eine reflektierende Mikrostruktur bildenden reflexionserhöhenden Beschichtung (35, 40), wobei die reflektierende Mikrostruktur in Form eines Mosaiks aus einer Vielzahl reflektierender Mosaikelemente vorliegt und die reflektierenden Mosaikelemente das einfallende Licht mit Bezug auf die Ebene des Plättchens nicht in die Richtung des Spiegelreflexes, sondern in eine davon abweichende Raumrichtung reflektieren und jeweils eine laterale Abmessung 1, die größer als 2 µm ist, aufweisen, wobei die reflexionserhöhende Beschichtung eine Metallisierung ist, die von einer lasierenden Farbschicht (34, 39) bedeckt ist, und die Prägelackschicht (36, 38) in einem Farbton eingefärbt ist, der mit dem Farbton der lasierenden Farbschicht (34, 39) identisch ist;
e) den Schritt des Weiterverarbeitens und Zerkleinerns des erhaltenen Schichtaufbaus zu einzelnen plättchenförmigen Pigmenten (33, 37).

11. Verfahren nach Anspruch 10, wobei im Schritt e) vor dem Zerkleinern des erhaltenen Schichtaufbaus zu einzelnen plättchenförmigen Pigmenten zunächst das Ablösen des Trägersubstrats vom beschichteten Prägelack erfolgt.

## Claims

1. A platelet-shaped pigment (33, 37) having a layered structure comprising, in order, the following layers:
- optionally, a carrier substrate;
- a transparent embossing lacquer layer (36, 38) with an embossed relief structure;
- a reflection-enhancing coating (35, 40) following the relief structure and forming a reflective microstructure, wherein the reflective microstructure is in the form of a mosaic comprising a plurality of reflective mosaic elements, and the reflective mosaic elements reflect the incident light, with respect to the plane of the wafer, not in the direction of specular reflection but in a spatial direction deviating therefrom, and each has a lateral dimension 1 greater than 2 µm, **characterized in that** the reflection-enhancing coating is a metallization covered by a translucent color layer (34, 39), and the embossing lacquer layer (36, 38) is colored in a shade identical to the shade of the translucent color layer (34, 39).

2. A platelet-shaped pigment according to claim 1, wherein the lateral dimension 1 satisfies the following relationship: 4 µm < 1 < 25 µm, more preferably the relationship 4 µm < 1 < 20 µm, even more preferably the relationship 4 µm < 1 ≤ 10 µm, and particularly preferably the relationship 6 µm < 1 ≤ 10 µm.

3. A platelet-shaped pigment according to claim 1 or 2, wherein the reflective microstructure consists of basic elements selected from the group consisting of saw teeth or wedges, cones, truncated cones, pyramids, and truncated pyramids.

4. A platelet-shaped pigment according to any one of claims 1 to 3, wherein the pigment additionally comprises a magnetic layer.

5. Printing ink comprising platelet-shaped pigments according to any one of claims 1 to 4.

6. Printing ink according to claim 5, wherein the printing ink is a screen printing ink, flexographic ink, or gravure ink.

7. Printing ink according to claim 5 or 6, wherein the printing ink comprises two or more types of pigments that differ in terms of color impression.

8. Printing ink according to claim 7, wherein the printing ink comprises two types of pigments, the first type of pigment being based on platelet-shaped pigments according to any one of claims 1 to 4 and the second type of pigment being based on conventional platelet-shaped metallic pigments with a flat reflective layer.

9. A security feature for securing valuable documents, in particular banknotes, comprising platelet-shaped pigments according to any one of claims 1 to 4 or obtainable by using an ink according to any one of claims 5 to 8.

10. A method for producing a platelet-shaped pigment (33, 37) according to any one of claims 1 to 4, comprising
a) providing a carrier substrate, e.g., a carrier film;
b) applying an embossing lacquer (36, 38) to the carrier substrate;
c) embossing a relief structure into the embossing lacquer (36, 38);
d) providing the relief structure with a reflection-enhancing coating (35, 40) that follows the relief structure and forms a reflective microstructure, wherein the reflective microstructure is in the form of a mosaic comprising a plurality of reflective mosaic elements, and the reflective mosaic elements reflect the incident light, with respect to the plane of the wafer, not in the direction of the specular reflection but in a spatial direction deviating therefrom, and each has a lateral dimension 1 greater than 2 µm, wherein the reflection-enhancing coating is a metallization covered by a translucent color layer (34, 39), and the embossing lacquer layer (36, 38) is colored in a shade identical to the shade of the translucent color layer (34, 39);
e) the step of further processing and comminuting the resulting layer structure into individual platelet-shaped pigments (33, 37).

11. The method according to claim 10, wherein, in step e), prior to comminuting the resulting layer structure into individual platelet-shaped pigments, the carrier substrate is first detached from the coated embossing lacquer.

## Revendications

1. Pigment en forme de plaquette (33, 37) présentant une structure stratifiée comprenant, dans l'ordre, les couches suivantes :
- éventuellement un substrat de support ;
- une couche de vernis gaufré transparente (36, 38) présentant une structure en relief gaufrée ;
- un revêtement augmentant la réflexion (35, 40) formant une microstructure réfléchissante, qui suit la structure en relief, la microstructure réfléchissante se présentant sous la forme d'une mosaïque composée d'une multitude d'éléments de mosaïque réfléchissants, et les éléments de mosaïque réfléchissants réfléchissant la lumière incidente, par rapport au plan de la plaquette, non pas dans la direction de la réflexion spéculaire, mais dans une direction spatiale s'en écartant, et présentant chacun une dimension latérale 1 supérieure à 2 µm, **caractérisé en ce que** le revêtement augmentant la réflexion est une métallisation recouverte d'une couche de couleur translucide (34, 39), et la couche de vernis gaufré (36, 38) est teintée dans une teinte identique à celle de la couche de couleur translucide (34, 39).

2. Pigment en forme de plaquettes selon la revendication 1, dans lequel la dimension latérale 1 satisfait à la relation suivante : 4 µm < 1 < 25 µm, de préférence à la relation 4 µm < 1 < 20 µm, de manière encore plus préférée à la relation 4 µm < 1 ≤ 10 µm, et de manière particulièrement préférée à la relation 6 µm < 1 ≤ 10 µm.

3. Pigment en forme de plaquettes selon la revendication 1 ou 2, dans lequel la microstructure réfléchissante est constituée d'éléments de base choisis parmi le groupe comprenant des dents de scie ou des coins, des cônes, des cônes tronqués, des pyramides et des pyramides tronquées.

4. Pigment en forme de plaquettes selon l'une des revendications 1 à 3, le pigment comportant en outre une couche magnétique.

5. Encre d'impression contenant des pigments en forme de plaquettes selon l'une des revendications 1 à 4.

6. Encre d'imprimerie selon la revendication 5, l'encre d'imprimerie étant une encre de sérigraphie, une encre de flexographie ou une encre d'héliogravure.

7. Encre d'imprimerie selon la revendication 5 ou 6, l'encre d'imprimerie comportant deux ou plusieurs types de pigments qui se distinguent par leur rendu chromatique.

8. Encre d'imprimerie selon la revendication 7, dans laquelle l'encre d'imprimerie comprend deux types de pigments, dont le premier type de pigment est à base de pigments en forme de plaquettes selon l'une des revendications 1 à 4 et le second type de pigment est à base de pigments métalliques conventionnels en forme de plaquettes comportant une couche réfléchissante plane.

9. Élément de sécurité destiné à la protection de documents de valeur, en particulier de billets de banque, comprenant des pigments en forme de plaquettes selon l'une des revendications 1 à 4 ou pouvant être obtenu en utilisant une encre d'imprimerie selon l'une des revendications 5 à 8.

10. Procédé de fabrication d'un pigment en forme de plaquettes (33, 37) selon l'une des revendications 1 à 4, comprenant
a) la mise à disposition d'un substrat de support, par exemple une feuille de support ;
b) l'application d'une laque de gaufrage (36, 38) sur le substrat de support ;
c) l'estampage d'une structure en relief dans la laque d'estampage (36, 38) ;
d) l'application sur la structure en relief d'un revêtement (35, 40) augmentant la réflexion, qui suit la structure en relief et forme une microstructure réfléchissante, la microstructure réfléchissante se présentant sous la forme d'une mosaïque composée d'une multitude d'éléments de mosaïque réfléchissants, et les éléments de mosaïque réfléchissants réfléchissant la lumière incidente, par rapport au plan de la plaquette, non pas dans la direction du reflet spéculaire, mais dans une direction spatiale s'en écartant, et présentant chacun une dimension latérale 1 supérieure à 2 µm, , le revêtement augmentant la réflexion étant une métallisation recouverte d'une couche de couleur translucide (34, 39), et la couche de vernis gaufré (36, 38) étant teintée dans une teinte identique à celle de la couche de couleur translucide (34, 39) ;
e) l'étape consistant à traiter et à broyer l'assemblage de couches obtenu pour obtenir des pigments individuels en forme de plaquettes (33, 37).

11. Procédé selon la revendication 10, dans lequel, à l'étape e), avant le broyage de l'assemblage de couches obtenu en pigments individuels en forme de plaquettes, on procède d'abord au détachement du substrat de support de la laque de gaufrage enduite.
